## Europäisches Patentamt

## European Patent Office

## Office européen des brevets

(11) Veröffentlichungsnummer: **0 128 436**
A2

# (12) EUROPÄISCHE PATENTANMELDUNG

(21) Anmeldenummer: **84106014.8**

(51) Int. Cl.³: **B 60 K 23/04,** B 62 D 5/06

(22) Anmeldetag: **26.05.84**

(30) Priorität: **13.06.83 US 503967**

(71) Anmelder: **DEERE & COMPANY, 1 John Deere Road, Moline Illinois 61265 (US)**

(72) Erfinder: **Sparks, Gregory Evan, 2623 Barton Avenue, Waterloo Iowa 50702 (US)**
Erfinder: **Larson, David Alan, 2031 West 8th, Cedar Falls Iowa (US)**

(43) Veröffentlichungstag der Anmeldung: **19.12.84 Patentblatt 84/51**

(74) Vertreter: **Gramm, Werner, Prof. Dipl.-Ing. et al, Patentanwälte Gramm + Lins Theodor-Heuss-Strasse 2, D-3300 Braunschweig (DE)**

(84) Benannte Vertragsstaaten: **DE FR GB**

(54) **Steuerung einer Differentialsperre.**

(57) Ein Steuersystem für eine Differentialsperre umfaßt ein Solenoid-Ventil (22, 24), das in Abhängigkeit der Arbeitsweise eines Steuerkreises (30) hydraulisch arbeitende Differentialsperren (14, 16) betätigt. Der Steuerkreis (30) umfaßt normalerweise geschlossene, lenkungsabhängige Schalter (46, 48), die zum Entsperren der Differentiale dann öffnen, wenn die Lenkungskraft einen bestimmten Wert überschreitet. Die lenkungsabhängigen Schalter (46, 48) werden von Stößeln (70) betätigt. die an beiden Enden eines Ventilschiebers (66) eines konventionellen pilotgesteuerten Lenkungsventils (50) Vorsteuerdrücken ausgesetzt sind.

Steuerung einer Differentialsperre

Die Erfindung betrifft eine lenkungsabhängige Steuerung einer
Differentialsperre in einem Fahrzeug mit hydraulischem Lenkungssystem, das ein pilotdruckbetätigtes Lenkungsventil aufweist,
und mit einem Ausgleichsgetriebe, das durch die Differentialsperre gesperrt oder aber freigegeben werden kann.

Es ist bekannt, bestimmte Fahrzeuge, z. B. in der Landwirtschaft eingesetzte Traktoren, mit Ausgleichsgetrieben zu versehen, die wahlweise gesperrt oder freigegeben werden können.
Es sind Systeme zur Steuerung der Differentialsperren bekannt,
bei denen ein solenoidbetätigtes Differentialsperren-Steuerventil über einen einzigen, manuell betätigten Fußbodenschalter
gesteuert wird. Bei diesem System muß aber der Fahrer des Fahrzeuges ständig den Bodenschalter niederdrücken, um das Ausgleichsgetriebe gesperrt zu halten. Sowohl bei Breitspur-
Schleppern als auch bei vierradangetriebenen Traktoren mit
Differentialsperren kann ein gesperrtes Ausgleichsgetriebe die
Lenkung des Schleppers stören. Eine bei Breitspur-Schleppern
anwendbare Lösung dieses Problems besteht darin, das Ausgleichsgetriebe in Abhängigkeit von der Betätigung der linken oder rechten Bremse zu entsperren, da die Bremsen häufig zur Unterstützung beim Drehen des Breitspur-Schleppers benutzt werden. Ein derartiges System ist beschrieben im US-Patent 2,874,790. In dieser Vorveröffentlichung ist ferner eine andere Lösung des genannten Problems offenbart, wonach die Steuerung der Differentialsperre in Abhängigkeit eines Relativwinkels zwischen mechanischen Teilen der Schleppersteuerung erfolgt. Dieses System weist jedoch einen Nachteil auf:

Es ist häufig erforderlich, mit einem landwirtschaftlichen Schlepper an einem Hang zu arbeiten, wobei das vordere Ende des Schleppers ständig unter einem leichten Winkel hangaufwärts gehalten werden muß, um der Tendenz des Traktors entgegenzuwirken, hangabwärts zu rutschen. In einer derartigen Situation, bei der es nur eines geringen Lenkaufwandes bedarf, um der hangabwärts gerichteten Bewegung entgegenzuwirken, wäre es wünschenswert, das Ausgleichsgetriebe gesperrt zu halten. Bei einem vom Lenkwinkel abhängigen System gemäß US-Patent 2,874,790 erfolgt jedoch automatisch die Entsperrung des Ausgleichsgetriebes bei der geschilderten Hangsituation, sobald der Lenkwinkel den bestimmten Winkel überschreitet, oberhalb dessen das Ausgleichsgetriebe gesperrt ist, und zwar jeweils unabhängig davon, ob diese Entsperrung wünschenswert oder notwendig ist.

Der Erfindung liegt die Aufgabe zugrunde, die eingangs erläuterte Steuerung einer Differentialsperre nicht mehr abhängig zu machen von einem bestimmten Einschlagwinkel der Lenkung.

Diese Aufgabe wird gemäß der Erfindung gelöst durch einen druckbetätigten Schalter, der von einem auf das eine Ende eines Schiebers des Lenkventils wirkenden Vorsteuerdruck beaufschlagt wird und dann zur Freigabe des Ausgleichsgetriebes schaltet, wenn der Vorsteuerdruck einen vorgegebenen Druck übersteigt.

Ein Solenoid-Ventil kann die hydraulische Differentialsperre steuern in Abhängigkeit von der Arbeit eines Steuerkreises. Dieser Steuerkreis umfaßt normalerweise geschlossene, lenkungsabhängige Schalter, die dann zum Entsperren der Ausgleichsgetriebe öffnen, wenn der Lenkaufwand einen bestimmten Wert übersteigt. Die lenkungsabhängigen Schalter werden von Stößeln betätigt, die an den beiden Enden des Schiebers eines konventionellen pilotgesteuerten Lenkventils Vorsteuerdrücken ausgesetzt sind.

Weitere Einzelheiten der Erfindung sind Gegenstand der Unteransprüche und werden anhand eines Ausführungsbeispiels näher erläutert.

In der Zeichnung ist eine als Beispiel dienende Ausführungsform der Erfindung dargestellt. Es zeigen:

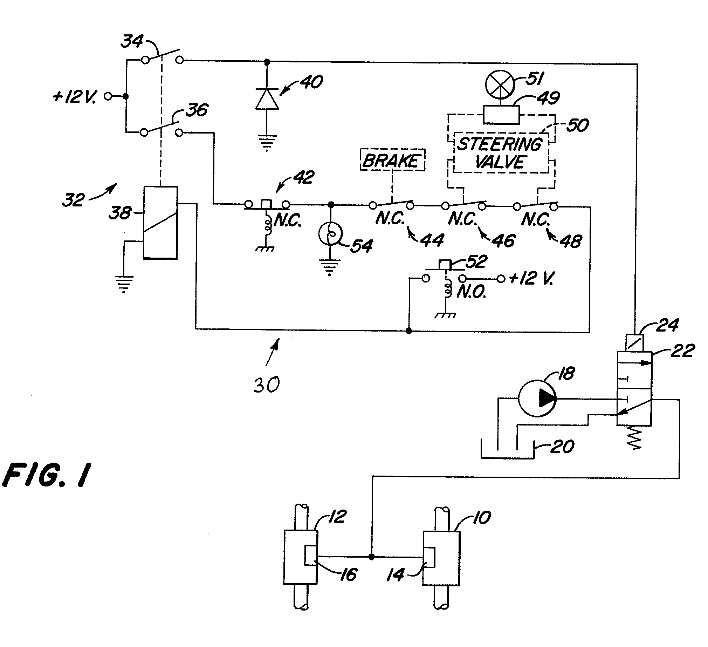

Figur 1 — in einem vereinfachten schematischen Diagramm ein Steuersystem für eine Differentialsperre und

Figur 2 — im Längsschnitt einen von der Lenkung eines Fahrzeuges abhängigen Schalter.

In der Kraftübertragung eines vierradangetriebenen Fahrzeuges sind in der Vorderachse und der rückwärtigen Achse übliche Ausgleichsgetriebe 10,11 eingebaut mit herkömmlichen Differentialsperren 14,16 , die vorzugsweise hydraulisch betätigbar sind und den im US-Patent 3,292,720 beschriebenen Ausführungsformen entsprechen können. Die Strömungsverbindung zwischen den Differentialsperren 14,16 , eine Pumpe 18 und ein Reservoir 20 werden von einem konventionellen solenoidbetätigten Zwei-Wege-(Zwei-Stellungs-)Ventil 22 mit Solenoid 24 gesteuert.

Ein Steuerkreis 30 weist eine Batterie oder eine Spannungsquelle (+12 V) sowie ein normalerweise offenes zweipoliges Relais 32 auf mit Schaltern 34 und 35, die von einer Relaisspule 38 gesteuert werden. Die gemeinsame Seite des Schalters 34 und 36 ist an die 12-Volt-Spannungsquelle angeschlossen. Die andere Seite des Schalters 34 ist an das Solenoid 24 angeschlossen und vorzugsweise außerdem über eine Diode 40 geerdet, um eine Lichtbogenbildung zu verhindern, wenn das Relais 32 öffnet. Die andere Seite des Relaisschalters 36 ist über in Reihe geschaltete Schalter 42,44,46 und 48 an die Relaisspule 38 angeschlossen. Der Schalter 42 ist vorzugsweise im Armaturenbrett montiert, normalerweise geschlossen und ist ein Federdruckschalter. Der Schalter 44 ist vorzugsweise üblicherweise geschlossen und öffnet bei Betätigung der Fahrzeugbremsen, wie es im US-Patent 2,874,790 beschrieben ist. Bei den Schaltern 46 und 48 handelt es sich um vorzugsweise normalerweise geschlossene Schnapp-

0128436

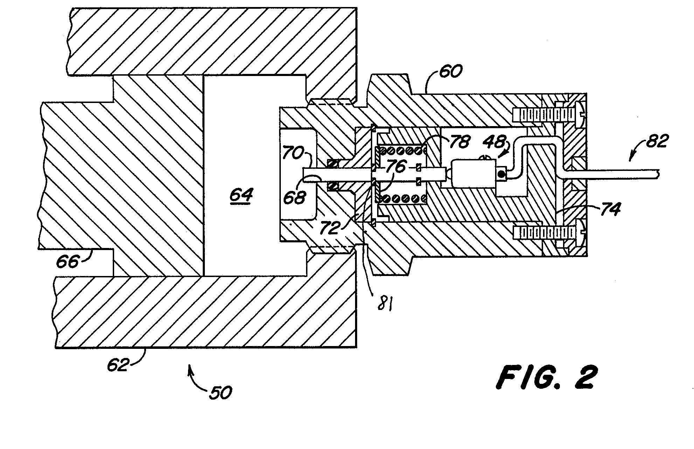

schalter, die wirkungsmäßig an ein konventionelles pilotgesteuertes Lenkungsventil 50 des Fahrzeugs gekuppelt sind, wie es später unter Hinweis auf Figur 2 näher erläutert wird. Das Lenkungsventil 50 arbeitet in Abhängigkeit von einem Vorsteuerdruck, der von einer konventionellen Dosierpumpe 49 erzeugt wird, die an das Lenkrad 51 angeschlossen ist.

Ein normalerweise offener kurzzeitiger Kontaktschalter 52 ist zwischen die 12-Volt-Spannungsquelle und die Relaisspule 38 geschaltet. Eine Kontrollampe 54 ist mit ihrem einen Kontakt zwischen die Schalter 42 und 44 und mit ihrem anderen Kontakt an eine Erdung geschaltet, so daß die Lampe 54 anzeigen kann, wenn das Relais 34 geschlossen und die Ausgleichsgetriebe 10,12 gesperrt sind.

Gemäß Figur 2 ist ein hohles Schaltergehäuse 60 in das eine Ende eines Gehäuses 62 des Lenkungsventils 50 eingeschraubt und so einem Vorsteuerdruck ausgesetzt, der in einer Kammer 64 auf das eine Ende eines Ventilschiebers 66 wirkt. Das Schaltergehäuse 60 weist eine Axialbohrung 68 auf, in der ein Betätigungsstößel 70 verschiebbar gelagert ist, der außerdem in einem Flansch 72 und einem Gehäuseteil 74 geführt ist. Der Stößel 70 trägt ein scheibenförmiges Federwiderlager 76, gegen das eine Schraubenfeder 78 anliegt, die den Stößel 70 umschließt und ihn in Richtung auf die Kammer 64 drückt, bis der Stößel 70 mit einem Federring 81 anschlägt. Das eine Ende des Stößels 70 liegt zur Betätigung des normalerweise geschlossenen Schnappschalters 48 an diesem an, bei dem es sich um einen konventionellen Cherry-Subminiaturschalter handeln kann. Elektrische Kabel 82 verbinden den Schalter 48 mit dem Steuerkreis 30. Eine Konstruktion vergleichbar der in Figur 2 dargestellten Ausführungsform ist an beiden Enden des Lenkungsventils 50 angebracht, wobei jede Konstruktion einen der lenkungsbetätigten Schalter 46 und 48 umfaßt.

Die dargestellte Steuerung arbeitet wie folgt:

Um die entsperrten Ausgleichsgetriebe 10,12 zu sperren, schließt die Bedienungsperson kurzzeitig den Schalter 52, wodurch die Spule 38 erregt wird und die Schalter 34,36 schließt, so daß das Solenoid 24 über den Schalter 34 erregt wird. Wird der Schalter 52 losgelassen, bleibt das Relais geschlossen, da die Spule 38 über die Schalter 36 und 42 bis 48 erregt bleibt. Zu diesem Zeitpunkt kann das Ausgleichsgetriebe durch manuelles Öffnen des Schalters 42 oder durch Bremsbetätigung entsperrt werden, die den Schalter 44 öffnet, der in beiden Fällen die Relaisspule 38 energielos macht und die Relaisschalter 34,36 öffnet. Während der Sperrung der Ausgleichsgetriebe kann das Fahrzeug gelenkt werden, ohne dabei die Ausgleichsgetriebe zu entsperren, und zwar solange, wie der Vorsteuerdruck in der Kammer 64 unterhalb eines vorgegebenen Schwellenwertes bleibt, wie z. B. 18,3 bis 25,3 kg/cm² (260 bis 360 psi), der vorzugsweise mit einer Lenkrad-Verdrehungskraft von 19 bis 22 nt-m (Newton-Meter) korrespondiert. Dies erlaubt es dem Fahrer, in einigen Fällen, wie z. B. an einem Abhang, den Schlepper zu lenken, ohne dabei die Differentiale zu entsperren. Stört jedoch die Sperrung der Differentiale die Lenkung des Schleppers, dann wird der Fahrer normalerweise dadurch reagieren, daß er eine größere Verdrehungskraft auf das Lenkrad aufbringt, wodurch wiederum der Vorsteuerdruck auf der einen Seite des Ventilschiebers 66 erhöht wird. Erreicht diese Verdrehungskraft 19 bis 22 nt-m, erreicht der Vorsteuerdruck die erforderliche Größe, um den Betätigungsstößel 70 zu verschieben und so den entsprechenden Schalter 46 oder 48 zu schließen. Hierdurch werden die Relaisspule 38 stromlos gemacht, die Schalter 34 und 36 geöffnet, das Solenoid 24 stromlos gemacht und über das Ventil 22 die Differentiale entsperrt.

Patentansprüche:

1. Lenkungsabhängige Steuerung einer Differentialsperre (14,16) in einem Fahrzeug mit hydraulischem Lenkungssystem, das ein pilotdruckbetätigtes Lenkungsventil (50) aufweist, und mit einem Ausgleichsgetriebe (10,12), das durch die Differentialsperre (14,16) gesperrt oder aber freigegeben werden kann, g e k e n n z e i c h n e t durch einen druckbetätigten Schalter (46), der von einem auf das eine Ende eines Schiebers (66) des Lenkventils (50) wirkenden Vorsteuerdruck beaufschlagt wird und dann zur Freigabe des Ausgleichsgetriebes (10,12) schaltet, wenn der Vorsteuerdruck einen vorgegebenen Druck übersteigt.

2. Steuerung nach Anspruch 1, dadurch gekennzeichnet, daß der druckbetätigte Schalter (46) normalerweise geschlossen ist und durch den vorgegebenen Vorsteuerdruck zur Freigabe des Differentials (10,12) geöffnet wird.

3. Steuerung nach Anspruch 1 oder 2, dadurch gekennzeichnet, daß der druckbetätigte Schalter (46) an einem Ende des Lenkventilgehäuses (62) befestigt ist.

4. Steuerung nach Anspruch 3, dadurch gekennzeichnet, daß an dem gegenüberliegenden Ende des Lenkventilgehäuses (62) ein zweiter druckbetätigter Schalter (48) befestigt ist, der von einem auf das andere Ende des Lenkventilschiebers (66) wirkenden Vorsteuerdruck beaufschlagt wird.

5. Steuerung nach einem der vorhergehenden Ansprüche, gekennzeichnet durch folgende Merkmale:

       ein a) Es ist/normalerweise offenes Stromstoßrelais (32) mit einem zweipoligen Schalter (34,36) vorgesehen, dessen gemeinsame eine Seite an einer Spannungsquelle angeschlossen ist, während die andere Seite des einen Polschalters (34) mit der Differentialsperre (14,16) verbunden ist;

   b) eine Relaisspule (38) dient zum Schließen des zweipoligen Schalters (34,36) und ist mit einem ersten Anschluß geerdet und mit einem zweiten Anschluß über die in Reihe liegenden druckbetätigten Schalter (46,48) mit der anderen Seite des anderen Polschalters (36) verbunden; und

   c) die Steuerung der Differentialsperren (14,16) erfolgt in Abhängigkeit der Betätigung des Relais (32) sowie der druckbetätigten Schalter (46,48).

6. Steuerung nach Anspruch 5, dadurch gekennzeichnet, daß zwischen Spannungsquelle und zweitem Anschluß der Relaisspule (38) ein normalerweise offener, kurzzeitiger Kontaktschalter (52) geschaltet ist.

7. Steuerung nach einem der vorhergehenden Ansprüche, gekennzeichnet durch folgende Merkmale des druckbetätigten Schalters (48):

   a) An dem einen Ende des Lenkventilgehäuses (62) ist ein hohles Schaltergehäuse (60) befestigt, das eine Bohrung (68) aufweist, die sich in eine Pilotkammer (64) des

Lenkventils (50) öffnet;

b) in der Bohrung (68) ist ein Stößel (70) verschiebbar gelagert, der dem Vorsteuerdruck in der Pilotkammer (64) ausgesetzt ist;

c) innerhalb des Schaltergehäuses (60) ist ein Schnappschalter (48) angeordnet, an dem der Stößel (70) anliegt; und

d) der Stößel (70) wird von einem Federelement (78) gegen die Wirkung des Vorsteuerdruckes von dem Schnappschalter (48) weggedrückt, betätigt dann aber den Schnappschalter (48), wenn der Vorsteuerdruck den vorgegebenen Druck übersteigt.

FIG. 1

1/2

0128436

FIG. 2